# EUROPEAN PATENT APPLICATION

(11) **EP 4 832 424 A1**
(43) Date of publication of application: **28.10.2026**
(21) Application number: 25191070.9
(22) Date of filing: 22.07.2025
(51) Int. Cl.: H04L 12/64, H04L 49/101, H04L 49/20, H04L 49/253, H04L 49/00, H04L 49/35, H04L 49/351, H04L 12/40

(54) **NETWORK FUSION METHOD AND SWITCH**

(30) Priority: 24.04.2025 CN 202510525446
(71) Applicant: Realtek Semiconductor Corporation, Hsinchu 30076 (TW)
(72) Inventor: XING, Zheng-Bei, SUZHOU, 215027 (CN)
(74) Representative: Cabinet Beaumont

(57) **Abstract**

A network fusion method is utilized to fuse an EtherCAT network into an Ethernet, which includes the following steps: connecting an EtherCAT device to a switch, in which the switch has at least one port (including a normal port, an EtherCAT endpoint port, and an EtherCAT edge port) for transmitting at least one packet (including a normal packet and an EtherCAT packet); utilizing a port rule to regulate the at least one port, and utilizing a next-hop port setting to determine the destination port to which the EtherCAT packet is to be transmitted; compensating a transmission rate difference to make the switch support cut-through transmission in response to the transmission rate difference existing between the EtherCAT endpoint port and the EtherCAT edge port; and transmitting the EtherCAT packet first while the normal packet and the EtherCAT packet are mixed transmitted by each of the at least one port.

## Description

### BACKGROUND

### Technical Field

The present disclosure relates to a network fusion method and a switch, and more particularly to a network fusion method and a switch utilized to fuse an Ethernet for Control Automation Technology (EtherCAT) network into an Ethernet.

### Description of Related Art

Ethernet for Control Automation Technology (EtherCAT) is an open architecture and a real-time industrial Ethernet technology. The EtherCAT protocol disclosed in the IEC standard IEC61158 is suitable for real-time hardware and software requirements in automation technology, testing, measurement, and other applications. EtherCAT is widely utilized in industrial automation fields, such as motion control, robotics, etc., which usually require extremely high real-time performance. In other words, EtherCAT networks are characterized by extremely low latency. Although the EtherCAT network is developed based on Ethernet technology, the EtherCAT network is generally closed. That is, although the EtherCAT network shares the lowest physical layer in the network hierarchy with the Ethernet, the network architecture of its upper layers (including the data link layer, network layer, transport layer, etc.) is customized. Therefore, EtherCAT networks are usually built independently with dedicated hardware that supports EtherCAT, and are not mixed with Ethernet.

### SUMMARY

The purpose of the present disclosure is to provide a network fusion method and a switch for fusing an EtherCAT network into an Ethernet, thereby achieving simultaneous transmission of normal packets and EtherCAT packets, while also meeting the low-latency real-time requirements of the EtherCAT network.

One aspect of the present disclosure relates to a network fusion method, utilized to fuse an Ethernet for Control Automation Technology (EtherCAT) network into an Ethernet, the network fusion method includes the following steps: connecting an EtherCAT device to a switch, in which the switch has at least one port for transmitting at least one packet, in which the at least one port includes a normal port, an EtherCAT endpoint port, and an EtherCAT edge port, and in which the at least one packet includes a normal packet and an EtherCAT packet; utilizing a port rule to regulate the normal port, the EtherCAT endpoint port and the EtherCAT edge port, and utilizing a next-hop port setting to determine a destination port to which the EtherCAT packet is to be transmitted; compensating a transmission rate difference to make the switch support cut-through transmission in response to the transmission rate difference existing between the EtherCAT endpoint port and the EtherCAT edge port; and transmitting the EtherCAT packet first in response to the at least one port mixed transmitting the normal packet and the EtherCAT packet.

In accordance with one or more embodiments of the present disclosure, the port rule regulates that the normal port is only utilized to transmit the normal packet, and is not utilized to transmit the EtherCAT packet.

In accordance with one or more embodiments of the present disclosure, the port rule regulates that the EtherCAT endpoint port is only utilized to transmit the EtherCAT packet, and is not utilized to transmit the normal packet.

In accordance with one or more embodiments of the present disclosure, the port rule regulates that the EtherCAT edge port is utilized to transmit the normal packet and the EtherCAT packet.

In accordance with one or more embodiments of the present disclosure, a transmission rate of the EtherCAT edge port is greater than a transmission rate of the EtherCAT endpoint port.

In accordance with one or more embodiments of the present disclosure, the network fusion method further includes the following steps: compensating the transmission rate difference between the EtherCAT endpoint port and the EtherCAT edge port through a packet copy operation.

In accordance with one or more embodiments of the present disclosure, a copy ratio of the packet copy operation is determined by the transmission rate difference.

In accordance with one or more embodiments of the present disclosure, the network fusion method further includes the following steps: compensating the transmission rate difference between the EtherCAT endpoint port and the EtherCAT edge port through a packet sampling operation.

In accordance with one or more embodiments of the present disclosure, the packet sampling operation is determined by the transmission rate difference.

In accordance with one or more embodiments of the present disclosure, the network fusion method further includes the following steps: utilizing a protocol number to determine whether a packet in the EtherCAT network is the EtherCAT packet.

Another aspect of the present disclosure relates to a switch connected to an EtherCAT device, which includes at least one port. The at least one port is configured to transmit at least one packet to the EtherCAT device, in which the at least one port includes a normal port, an EtherCAT endpoint port, and an EtherCAT edge port, and in which the at least one packet includes a normal packet and an EtherCAT packet. The switch is further configured to utilize a port rule to regulate the normal port, the EtherCAT endpoint port and the EtherCAT edge port, and utilize a next-hop port setting to determine a destination port to which the EtherCAT packet is to be transmitted. The switch is further configured to compensate a transmission rate difference to support cut-through transmission in response to the transmission rate difference existing between the EtherCAT endpoint port and the EtherCAT edge port. switch is further configured to transmit the EtherCAT packet first in response to the at least one port mixed transmitting the normal packet and the EtherCAT packet.

In accordance with one or more embodiments of the present disclosure, the port rule regulates that the normal port is only utilized to transmit the normal packet, and is not utilized to transmit the EtherCAT packet.

In accordance with one or more embodiments of the present disclosure, the port rule regulates that the EtherCAT endpoint port is only utilized to transmit the EtherCAT packet, and is not utilized to transmit the normal packet.

In accordance with one or more embodiments of the present disclosure, the port rule regulates that the EtherCAT edge port is utilized to transmit the normal packet and the EtherCAT packet.

In accordance with one or more embodiments of the present disclosure, a transmission rate of the EtherCAT edge port is greater than a transmission rate of the EtherCAT endpoint port.

In accordance with one or more embodiments of the present disclosure, the switch is further configured to compensate the transmission rate difference between the EtherCAT endpoint port and the EtherCAT edge port through a packet copy operation.

In accordance with one or more embodiments of the present disclosure, a copy ratio of the packet copy operation is determined by the transmission rate difference.

In accordance with one or more embodiments of the present disclosure, the switch is further configured to compensate the transmission rate difference between the EtherCAT endpoint port and the EtherCAT edge port through a packet sampling operation.

In accordance with one or more embodiments of the present disclosure, the packet sampling operation is determined by the transmission rate difference.

In accordance with one or more embodiments of the present disclosure, the switch is further configured to utilize a protocol number to determine whether a packet in the EtherCAT network is the EtherCAT packet.

### BRIEF DESCRIPTION OF THE DRAWINGS

This disclosure can be more fully understood by reading the following detailed description of the embodiments, with reference made to the accompanying drawings as follows:
FIG. 1 is a schematic diagram of an EtherCAT network architecture in accordance with some embodiments of the present disclosure.
FIG. 2 is a flowchart of a network fusion method in accordance with some embodiments of the present disclosure.
FIG. 3 is a schematic diagram of each port in a switch in accordance with some embodiments of the present disclosure.
FIG. 4 is a schematic diagram of a switch and an EtherCAT hybrid network in accordance with some embodiments of the present disclosure.

### DETAILED DESCRIPTION

The term "couple" and its conjugated forms means to complete any type of required junction, including electrical, mechanical, or fluid, to form a singular object from two or more previously non-joined objects.

A common network architecture implemented with Ethernet for Control Automation Technology (EtherCAT) generally has one EtherCAT master device and a plurality of EtherCAT slave devices. The packet is sent from the EtherCAT master device and transmitted through each node (e.g., each EtherCAT slave device) one by one. When the packet is transmitted through each node, each EtherCAT slave device may add its individual message to the packet being transmitted and then transmit the processed packet to the next node. When the packet is transmitted to the last node, on the return path of the packet flow (e.g., the process of transmitting the packet back to the EtherCAT master device), the transmitted packet is still transmitted through each node, but each EtherCAT slave device no longer processes the transmitted packet.

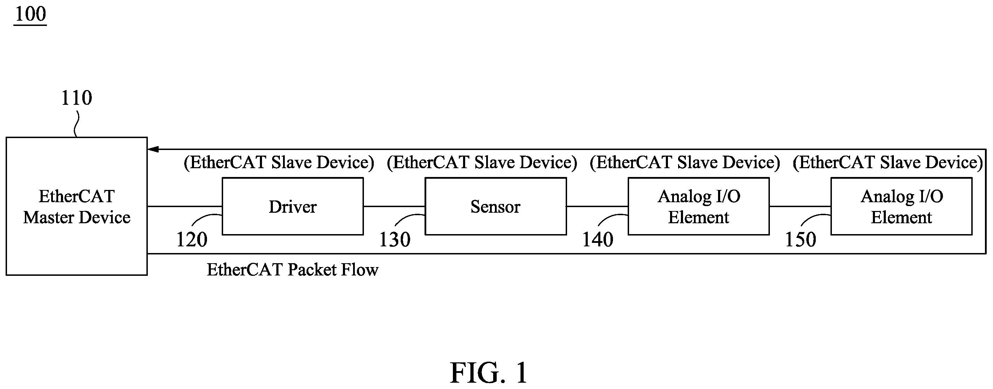

FIG. 1 is a schematic diagram of an EtherCAT network architecture 100 in accordance with some embodiments of the present disclosure. In one embodiment shown in FIG. 1, the EtherCAT network has an EtherCAT master device 110 and a plurality of EtherCAT slave devices, in which the plurality of EtherCAT slave devices include but are not limited to a driver 120, a sensor 130, an analog input/output (I/O) element 140, and a digital I/O element 150. The EtherCAT packet may be sent from the EtherCAT master device 110 and transmitted through each EtherCAT slave device one by one. In specific, when the packet is transmitted through the driver 120, the sensor 130, the analog I/O element 140 and the digital I/O element 150 in sequence, the driver 120, the sensor 130, the analog I/O element 140 and the digital I/O element 150 may sequentially add their individual messages to the EtherCAT packet being transmitted. After each EtherCAT slave device processing the EtherCAT packet, the EtherCAT packet is directly transmitted back to the EtherCAT master device, and the driver 120, the sensor 130, the analog I/O element 140, and the digital I/O element 150 no longer processes the transmitted EtherCAT packet on the return path of the EtherCAT packet flow.

The advantage of the EtherCAT network is its high real-time performance, but the disadvantage of the EtherCAT network is its limited bandwidth. In general applications of the EtherCAT network, the transmission rate of the EtherCAT network is megabits per second (Mbit/s), while in other special applications, the transmission rate of the EtherCAT network may also support up to 1 gigabit per second (Gbit/s). In some emerging applications currently under development (such as robotics and autonomous driving applications), multiple sensors such as cameras and radars need to be installed. Since the amount of sensing data collected from the sensors is quite large, the required total bandwidth may exceed the bandwidth limit of the EtherCAT network, and there may also be problems such as routing restrictions. The traditional EtherCAT networks may not meet the needs of such emerging applications. Compared with the EtherCAT network, the bandwidth supported by an Ethernet gradually increases with its development, and has evolved from the early supported transmission rates of 10 Gbit/s, 25 Gbit/s, and 50 Gbit/s to the currently supported transmission rate of 100 Gbit/s. Therefore, if the EtherCAT network can be fused into the Ethernet, the needs of some emerging applications (such as larger bandwidth) may be met.

However, there may be three problems while directly fusing the EtherCAT network into the Ethernet, as explained below.

Problem 1: the packet flow of normal packets (e.g., Ethernet packets) and the packet flow of EtherCAT packets may not be effectively isolated, so that the EtherCAT device may receive or send non-EtherCAT packets, which may cause the EtherCAT device to work abnormally.

Problem 2: a switch generally have two packet transmission modes: store-and-forward transmission and cut-through transmission. In general, the latency of the store-and-forward transmission is too high to meet the needs of the EtherCAT network. In contrast, although the cut-through transmission has the advantage of lower latency, if the transmission rate of the EtherCAT endpoint port (generally 100 Mbit/s) is not the same as the transmission rate of the EtherCAT edge port (possibly 10 Gbit/s), the switch is unable to perform the cut-through transmission.

Problem 3: When the port of the switch mixed transmits EtherCAT packets and normal packets, the EtherCAT packets may not be guaranteed to be transmitted first, resulting in high latency.

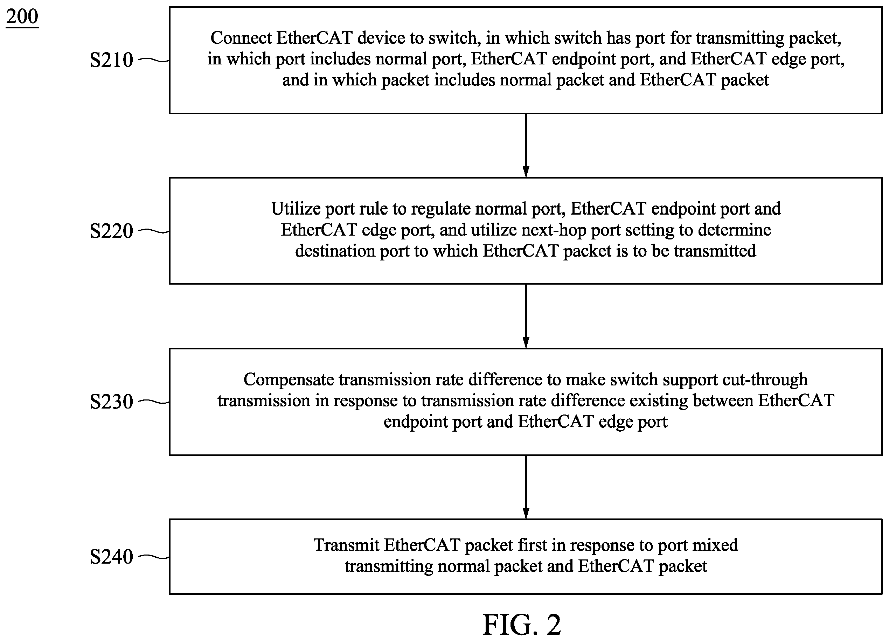

FIG. 2 is a flowchart of a network fusion method 200 in accordance with some embodiments of the present disclosure. The network fusion method 200 is utilized to fuse an EtherCAT network into an Ethernet, and the network fusion method 200 includes the following steps: Step S210 is to connect an EtherCAT device to a switch, in which the switch has at least one port for transmitting at least one packet, in which the at least one port includes a normal port, an EtherCAT endpoint port, and an EtherCAT edge port, and in which the at least one packet includes a normal packet and an EtherCAT packet; Step S220 is to utilize a port rule to regulate the normal port, the EtherCAT endpoint port and the EtherCAT edge port, and utilize a next-hop port setting to determine a destination port to which the EtherCAT packet is to be transmitted; Step S230 is to compensate a transmission rate difference to make the switch support cut-through transmission in response to the transmission rate difference existing between the EtherCAT endpoint port and the EtherCAT edge port; Step S240 is to transmit the EtherCAT packet first in response to the at least one port mixed transmitting the normal packet and the EtherCAT packet. The following describes how to overcome the above three network fusion problems through Steps S210 to S240 of the network fusion method 200.

First, in response to problem 1 (the packet flow of normal packets and the packet flow of EtherCAT packets may not be effectively isolated, resulting in possible abnormal operation of the EtherCAT device), the present disclosure determines the packet transmission way of each port in the switch through the designed port rule, thereby achieving effective isolation between normal packets and EtherCAT packets. It should also be noted that the distinction between normal packets and EtherCAT packets may be made by identifying a protocol number of the packet. For example, when the protocol number of the packet is identified as 0x88A4, it means that the packet is an EtherCAT packet, and when the protocol number of the packet is not identified as 0x88A4, it means that the packet is a normal packet.

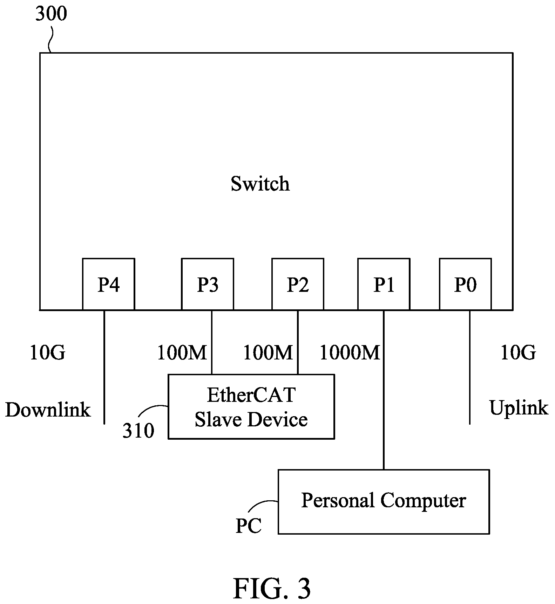

FIG. 3 is a schematic diagram of each port in a switch 300 in accordance with some embodiments of the present disclosure. As shown in FIG. 3, a switch 300 includes ports P0 to P4, in which ports P0 and P4 are EtherCAT edge ports (hereinafter ports P0 and P4 are also referred to as EtherCAT edge ports), port P1 is a normal port, and ports P2 and P3 are EtherCAT endpoint ports (hereinafter ports P2 and P3 are also referred to as EtherCAT endpoint ports). It should be noted that in the EtherCAT network, in general, the EtherCAT slave device 310 communicatively connects to the two EtherCAT endpoint ports (i.e., ports P2 and P3) of the switch 300; on the other hand, in general, the personal computer PC communicatively connects to the normal port P1 of the switch 300. In one embodiment shown in FIG. 3 , the present disclosure utilizes the designed port rule to regulate each port of the switch 300 (including but not limited to the EtherCAT edge ports P0 and P4 , the normal port P1 , and the EtherCAT endpoint ports P2 and P3 ). It should also be noted that FIG. 3 also indicates a common transmission rate of each port in the switch 300. For example, the transmission rates of the EtherCAT endpoint ports P2 and P3 are generally 100 Mbit/s (expressed as 100 M), the transmission rate of the normal port P1 is generally 1000 Mbit/s (expressed as 1000 M), and the transmission rates of the EtherCAT edge ports P0 and P4 are generally 10 Gbit/s (expressed as 10 G). In addition, in various embodiments, the number of switches 300 is not limited to that shown in FIG. 3.

In specific, the port rule regulates that the normal port P1 is only utilized to transmit normal packets (e.g., not utilized to transmit EtherCAT packets). The port rule also regulates that the EtherCAT endpoint ports P2 and P3 are only utilized to transmit EtherCAT packets (e.g., not utilized to transmit normal packets), and other packets that are not EtherCAT packets may be discarded. The port rule further regulates that the EtherCAT edge ports P0 and P4 are utilized to transmit normal packets as well as EtherCAT packets. In other words, the port rule regulates that packets cannot be transmitted between the EtherCAT endpoint ports P2, P3 and the normal port P1, thereby achieving effective isolation between the EtherCAT endpoint ports P2, P3 and the normal port P1.

Further, the EtherCAT packets are transmitted between EtherCAT endpoint ports according to the next-hop port setting, and the EtherCAT packets are also transmitted between EtherCAT endpoint ports and EtherCAT edge ports according to the next-hop port setting. In specific, after receiving the EtherCAT packets, the EtherCAT endpoint ports P2, P3 and the EtherCAT edge ports P0, P4 that can be utilized to transmit EtherCAT packets may transmit the EtherCAT packets to a destination port according to the next-hop port setting. In addition, other packets are transmitted between the normal ports according to an original port rule of the switch 300, and other packets are also transmitted between the EtherCAT edge ports and the normal ports according to the original port rule of the switch 300.

In detail, when the packet received by the EtherCAT endpoint ports P2 and P3 is not an EtherCAT packet (e.g., a normal packet), the EtherCAT endpoint ports P2 and P3 may discard the normal packet or transmit the normal packet according to another special rule designed by the switch 300. When the packet received by the EtherCAT endpoint ports P2 and P3 is an EtherCAT packet, the EtherCAT endpoint ports P2 and P3 may transmit the EtherCAT packet according to the next-hop port setting.

When the packet received by the EtherCAT edge ports P0 and P4 is not an EtherCAT packet (e.g., a normal packet), the EtherCAT edge ports P0 and P4 may transmit the normal packet according to a normal rule designed by the switch 300. When the packet received by the EtherCAT edge ports P0 and P4 is an EtherCAT packet, the EtherCAT edge ports P0 and P4 may transmit the EtherCAT packet according to the next-hop port setting.

When the packet received by the normal port P1 is not an EtherCAT packet (e.g., a normal packet), the normal port P1 may transmit the normal packet according to the normal rule designed by the switch 300. When the packet received by the normal port P1 is an EtherCAT packet, the normal port P1 may discard the EtherCAT packet or transmit the EtherCAT packet according to another special rule designed by the switch 300.

Next, in response to the Problem 2 (the transmission rates of the EtherCAT endpoint port and the EtherCAT edge port are not the same, resulting in the switch being unable to perform cut-through transmission), the present disclosure compensates for the transmission rate difference between the high-speed port (such as the EtherCAT edge port) and the low-speed port (such as the EtherCAT endpoint port) of the switch, so as to make the switch support cut-through transmission, instead of utilizing store-and-forward transmission with high latency, thereby meet the low latency needs of the EtherCAT network.

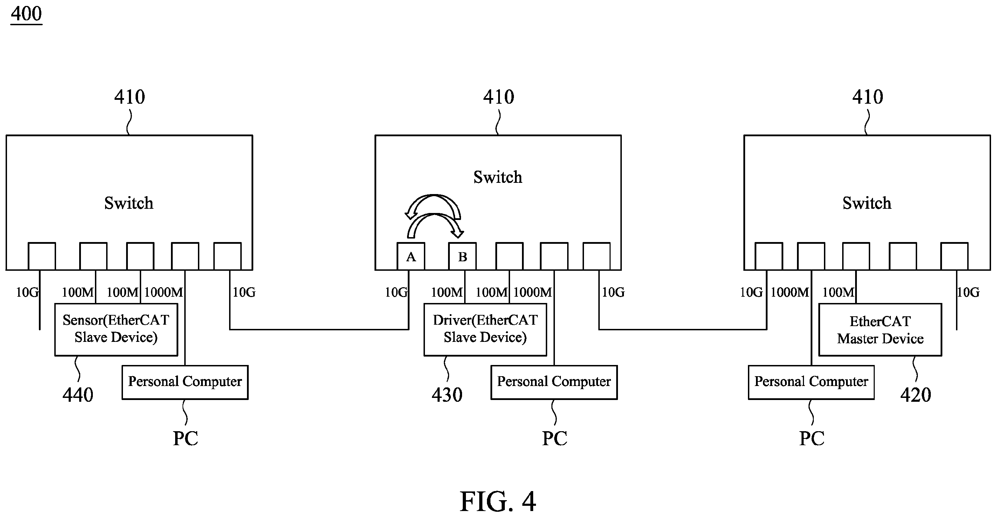

FIG. 4 is a schematic diagram of a switch and an EtherCAT hybrid network 400 in accordance with some embodiments of the present disclosure. As can be seen from FIG. 4, the EtherCAT hybrid network 400 is composed of an EtherCAT master device 420 , two EtherCAT slave devices (a driver 430 and a sensor 440), and switches 410 connected to the EtherCAT master device 420, the driver 430, and the sensor 440. Similar to FIG. 3, the common transmission rate of each port in each switch 410 is indicated in FIG. 4. Obviously, the transmission rate of the EtherCAT endpoint port (100 Mbit/s) is not the same as the transmission rate of the EtherCAT edge port (10 Gbit/s). If cut-through transmission is to be implemented, the problem of the transmission rate of the EtherCAT endpoint port and the transmission rate of the EtherCAT edge port not being the same must be solved (in general, the transmission rate of the EtherCAT edge port is much higher than the transmission rate of the EtherCAT endpoint port). Therefore, the present disclosure proposes to compensate the transmission rate difference between the high-speed port and the low-speed port of the switch 410 through a packet copy operation and a packet sampling operation.

In specific, in one embodiment in FIG. 4, when a low-speed port B (e.g., an EtherCAT endpoint port) receives an EtherCAT packet transmitted from a high-speed port A (e.g., an EtherCAT edge port), the original EtherCAT packet may be copied at a certain copy ratio through a packet copy operation to generate a copied EtherCAT packet, thereby achieving the effect of compensating the transmission rate difference between the high-speed port A and the low-speed port B. It should be noted that the copy ratio utilized in the packet copy operation is determined according to the transmission rate difference between the high-speed port A and the low-speed port B. For example, if the transmission rate of high-speed port A is 10 times the transmission rate of low-speed port B, the length of the EtherCAT packet after the packet copy operation may be lengthened to 10 times the original packet length to compensate the transmission rate difference between the high-speed port and low-speed port, thereby satisfying the conditions for the switch 410 to perform cut-through transmission.

In another embodiment in FIG. 4, when a high-speed port A (e.g., an EtherCAT edge port) receives an EtherCAT packet transmitted from a low-speed port B (e.g., an EtherCAT endpoint port), the copied EtherCAT packet may be sampled at a certain sampling ratio through a packet sampling operation to restore the original EtherCAT packet (e.g., restore the valid information from the copied EtherCAT packet. In some embodiments, the packet may also carry specific information including but not limited to the transmission rate of the source port, the packet type, etc.), thereby achieving the effect of compensating the transmission rate difference between the high-speed port A and the low-speed port B. It should be noted that the sampling ratio utilized in the packet sampling operation is determined according to the transmission rate difference between the high-speed port A and the low-speed port B. For example, if the transmission rate of low-speed port B is 0.1 times the transmission rate of high-speed port A, the length of the EtherCAT packet after the packet sampling operation may be shortened to 0.1 times the original packet length to compensate the transmission rate difference between the high-speed port and low-speed port, thereby satisfying the conditions for the switch 410 to perform cut-through transmission.

Next, in response to the Problem 3 (when the port of the switch mixed transmits EtherCAT packets and normal packets, the EtherCAT packets may not be guaranteed to be transmitted first, resulting in high latency), the present disclosure promotes packet preemptive transmission to ensures the EtherCAT packets to be transmitted first. In specific, after the switch utilizes the next-hop port setting to determine the destination port to which the EtherCAT packet is to be transmitted, it needs to interrupt the normal packet currently being transmitted and give priority to transmitting the EtherCAT packet instead. The normal packet whose transmission was interrupted may continue to be transmitted only after the EtherCAT packet transmission is completed. In other words, if the switch waits for the normal packet transmission to complete before transmitting the EtherCAT packet, it may cause heavy latency and fail to meet the real-time requirements of the EtherCAT network. Therefore, the switch also needs to support packet preemptive transmission to minimize latency.

In summary, the network fusion method and a switch disclosed herein establishes a transmission link of a virtual EtherCAT network by designing a port rule of switches, compensating transmission rate difference between ports, supporting packet preemptive transmission of ports, thereby integrating an EtherCAT network into an Ethernet, achieving simultaneous transmission of normal packets and EtherCAT packets, and also meeting the low-latency real-time requirements of the EtherCAT network.

## Claims

1. A network fusion method (200), utilized to fuse an Ethernet for Control Automation Technology (EtherCAT) network into an Ethernet, and **characterized by** comprising:
connecting an EtherCAT device to a switch (300), wherein the switch (300) has at least one port for transmitting at least one packet, wherein the at least one port comprises a normal port (P1), an EtherCAT endpoint port (P2, P3), and an EtherCAT edge port (P0, P4), and wherein the at least one packet comprises a normal packet and an EtherCAT packet;
utilizing a port rule to regulate the normal port (P1), the EtherCAT endpoint port (P2, P3) and the EtherCAT edge port (P0, P4), and utilizing a next-hop port setting to determine a destination port to which the EtherCAT packet is to be transmitted;
compensating a transmission rate difference to make the switch (300) support cut-through transmission in response to the transmission rate difference existing between the EtherCAT endpoint port (P2, P3) and the EtherCAT edge port (P0, P4); and
transmitting the EtherCAT packet first in response to the at least one port mixed transmitting the normal packet and the EtherCAT packet.

2. The network fusion method (200) of claim 1, **characterized by** further comprising:
compensating the transmission rate difference between the EtherCAT endpoint port (P2, P3) and the EtherCAT edge port (P0, P4) through a packet copy operation.

3. The network fusion method (200) of claim 2, **characterized in that** a copy ratio of the packet copy operation is determined by the transmission rate difference.

4. The network fusion method (200) of claim 1, **characterized by** further comprising:
compensating the transmission rate difference between the EtherCAT endpoint port (P2, P3) and the EtherCAT edge port (P0, P4) through a packet sampling operation.

5. The network fusion method (200) of claim 4, **characterized in that** a sampling ratio of the packet sampling operation is determined by the transmission rate difference.

6. The network fusion method (200) of claim 1, **characterized by** further comprising:
utilizing a protocol number to determine whether a packet in the EtherCAT network is the EtherCAT packet.

7. A switch (300) connected to an EtherCAT device and **characterized by** comprising:
at least one port configured to transmit at least one packet to the EtherCAT device, wherein the at least one port comprises a normal port (P1), an EtherCAT endpoint port (P2, P3), and an EtherCAT edge port (P0, P4), and wherein the at least one packet comprises a normal packet and an EtherCAT packet,
wherein the switch (300) is further configured to utilize a port rule to regulate the normal port (P1), the EtherCAT endpoint port (P2, P3) and the EtherCAT edge port (P0, P4), and utilize a next-hop port setting to determine a destination port to which the EtherCAT packet is to be transmitted,
wherein the switch (300) is further configured to compensate a transmission rate difference to support cut-through transmission in response to the transmission rate difference existing between the EtherCAT endpoint port (P2, P3) and the EtherCAT edge port (P0, P4),
wherein the switch (300) is further configured to transmit the EtherCAT packet first in response to the at least one port mixed transmitting the normal packet and the EtherCAT packet.

8. The switch (300) of claim 7, **characterized in that** the port rule regulates that the normal port (P1) is only utilized to transmit the normal packet, and is not utilized to transmit the EtherCAT packet.

9. The switch (300) of claim 7, **characterized in that** the port rule regulates that the EtherCAT endpoint port (P2, P3) is only utilized to transmit the EtherCAT packet, and is not utilized to transmit the normal packet.

10. The switch (300) of claim 7, **characterized in that** the port rule regulates that the EtherCAT edge port (P0, P4) is utilized to transmit the normal packet and the EtherCAT packet.

11. The switch (300) of claim 7, **characterized in that** a transmission rate of the EtherCAT edge port (P0, P4) is greater than a transmission rate of the EtherCAT endpoint port (P2, P3).

12. The switch (300) of claim 7, **characterized in that** the switch (300) is further configured to compensate the transmission rate difference between the EtherCAT endpoint port (P2, P3) and the EtherCAT edge port (P0, P4) through a packet copy operation.

13. The switch (300) of claim 12, **characterized in that** a copy ratio of the packet copy operation is determined by the transmission rate difference.

14. The switch (300) of claim 7, **characterized in that** the switch (300) is further configured to compensate the transmission rate difference between the EtherCAT endpoint port (P2, P3) and the EtherCAT edge port (P0, P4) through a packet sampling operation.

15. The switch (300) of claim 14, **characterized in that** a sampling ratio of the packet sampling operation is determined by the transmission rate difference.

## Amended claims

### Amended claims in accordance with Rule 137(2) EPC.

1. A network fusion method (200), utilized to fuse an Ethernet for Control Automation Technology (EtherCAT) network into an Ethernet, and **characterized by** comprising:
connecting an EtherCAT device to a switch (300) for transmitting packets, wherein the switch (300) has ports comprising a normal port (P1), an EtherCAT endpoint port (P2, P3), and an EtherCAT edge port (P0, P4), and wherein the packets comprise a non-EtherCAT packet and an EtherCAT packet;
utilizing a port rule to regulate the normal port (P1), the EtherCAT endpoint port (P2, P3) and the EtherCAT edge port (P0, P4), wherein the port rule regulates that the normal port (P1) is only utilized for non-EtherCAT packet transmission and not for EtherCAT packet transmission, the EtherCAT endpoint port (P2, P3) is only utilized for EtherCAT packet transmission and not for non-EtherCAT packet transmission, and the EtherCAT edge port (P0, P4) is utilized for EtherCAT packet transmission and non-EtherCAT packet transmission, and utilizing a next-hop port setting to determine a destination port to which the EtherCAT packet is to be transmitted;
compensating a transmission rate difference to make the switch (300) support cut-through transmission in response to the transmission rate difference existing between the EtherCAT endpoint port (P2, P3) and the EtherCAT edge port (P0, P4); and
utilizing the EtherCAT edge port (P0, P4) to transmit the EtherCAT packet and the non-EtherCAT packet, wherein the EtherCAT packet is transmitted first.

2. The network fusion method (200) of claim 1, **characterized by** further comprising:
compensating the transmission rate difference from the EtherCAT edge port (P0, P4) to the EtherCAT endpoint port (P2, P3) through a packet copy operation to lengthen the EtherCAT packet, wherein a transmission rate of the EtherCAT edge port (P0, P4) is greater than a transmission rate of the EtherCAT endpoint port (P2, P3).

3. The network fusion method (200) of claim 2, **characterized in that** a copy ratio of the packet copy operation is determined by the transmission rate difference.

4. The network fusion method (200) of claim 1, **characterized by** further comprising:
compensating the transmission rate difference from the EtherCAT endpoint port (P2, P3) to the EtherCAT edge port (P0, P4) through a packet sampling operation to shorten the EtherCAT packet, wherein a transmission rate of the EtherCAT edge port (P0, P4) is greater than a transmission rate of the EtherCAT endpoint port (P2, P3).

5. The network fusion method (200) of claim 4, **characterized in that** a sampling ratio of the packet sampling operation is determined by the transmission rate difference.

6. The network fusion method (200) of claim 1, **characterized by** further comprising:
utilizing a protocol number to determine whether a packet in the EtherCAT network is the EtherCAT packet.

7. A switch (300) connected to an EtherCAT device and **characterized by** comprising:
ports configured to transmit packets to the EtherCAT device, wherein the ports comprise a normal port (P1), an EtherCAT endpoint port (P2, P3), and an EtherCAT edge port (P0, P4), and wherein the packets comprise a non-EtherCAT packet and an EtherCAT packet,
wherein the switch (300) is further configured to utilize a port rule to regulate the normal port (P1), the EtherCAT endpoint port (P2, P3) and the EtherCAT edge port (P0, P4), wherein the port rule regulates that the normal port (P1) is only utilized for non-EtherCAT packet transmission and not for EtherCAT packet transmission, the EtherCAT endpoint port (P2, P3) is only utilized for EtherCAT packet transmission and not for non-EtherCAT packet transmission, and the EtherCAT edge port (P0, P4) is utilized for EtherCAT packet transmission and non-EtherCAT packet transmission, and utilize a next-hop port setting to determine a destination port to which the EtherCAT packet is to be transmitted,
wherein the switch (300) is further configured to compensate a transmission rate difference to support cut-through transmission in response to the transmission rate difference existing between the EtherCAT endpoint port (P2, P3) and the EtherCAT edge port (P0, P4),
wherein the switch (300) is further configured to utilize the EtherCAT edge port (P0, P4) to transmit the EtherCAT packet and the non-EtherCAT packet, wherein the EtherCAT packet is transmitted first.

8. The switch (300) of claim 7, **characterized in that** the switch (300) is further configured to compensate the transmission rate difference from the EtherCAT edge port (P0, P4) to the EtherCAT endpoint port (P2, P3) through a packet copy operation to lengthen the EtherCAT packet, wherein a transmission rate of the EtherCAT edge port (P0, P4) is greater than a transmission rate of the EtherCAT endpoint port (P2, P3).

9. The switch (300) of claim 8, **characterized in that** a copy ratio of the packet copy operation is determined by the transmission rate difference.

10. The switch (300) of claim 7, **characterized in that** the switch (300) is further configured to compensate the transmission rate difference from the EtherCAT endpoint port (P2, P3) to the EtherCAT edge port (P0, P4) through a packet sampling operation to shorten the EtherCAT packet, wherein a transmission rate of the EtherCAT edge port (P0, P4) is greater than a transmission rate of the EtherCAT endpoint port (P2, P3).

11. The switch (300) of claim 10, **characterized in that** a sampling ratio of the packet sampling operation is determined by the transmission rate difference.
